# EUROPEAN PATENT SPECIFICATION

(11) **EP 2 788 194 B1**
(45) Date of publication and mention of the grant of the patent: **02.10.2019**
(21) Application number: 12791471.1
(22) Date of filing: 22.11.2012
(51) Int. Cl.: C09D 11/34, C09D 11/40, B41J 2/00

(54) **HOT MELT CLEANING COMPOSITION, METHOD FOR PREPARING A HOT MELT CLEANING COMPOSITION AND USE THEREOF**
HEISSSCHMELZREINIGUNGSZUSAMMENSETZUNG, VERFAHREN ZUR HERSTELLUNG EINER HEISSSCHMELZREINIGUNGSZUSAMMENSETZUNG UND VERWENDUNG DAFÜR
COMPOSITION DE NETTOYAGE THERMOFUSIBLE, PROCÉDÉ DE PRÉPARATION D'UNE COMPOSITION DE NETTOYAGE THERMOFUSIBLE ET UTILISATION DE CETTE COMPOSITION

(30) Priority: 09.12.2011 EP 11192864; 30.12.2011 EP 11196184
(43) Date of publication of application: 15.10.2014
(73) Proprietor: OCE-Technologies B.V., 5914 CA Venlo (NL)
(72) Inventor: DE JONG, Jos, NL-6605 SN Wijchen (NL); PELZERS, Ronald J.H.M.C., NL-6085 DM Horn (NL); MIEDEMA, Mark, NL-5941 JN Velden (NL); BEEK, Dannis W.H., NL-6071 KP Swalmen (NL)
(74) Representative: OCE IP Department
(86) International application number: PCT/EP2012/073357
(87) International publication number: WO 2013/083413

(56) References cited:
- EP-A2- 0 479 501
- US-A- 5 122 187
- US-A- 6 110 265

## Description

The present invention relates to a hot melt cleaning composition. The present invention further relates to a method for preparing a hot melt cleaning composition and use of a hot melt cleaning composition. The present invention also relates to a kit for operating an ink jet apparatus. The present invention further relates to a method for cleaning a print head.

### Background of the invention

Print heads are used in printing devices to eject droplets of a marking material, such as ink, onto a receiving medium, such as a sheet of paper. The ink may be supplied via an ink inlet and is ejected by the print head through an orifice. The ink inlet and the orifice may be connected via an ink channel. In between the ink inlet and the orifice, a filter may be present for filtering the ink composition. However, even if a filter is present, unwanted substances, such as dust or impurities in the ink, may still be present in the ink channel and may accumulate in the ink channel or around the orifice. This may negatively influence the performance of the printing device. It is known in the art that unwanted substances may be removed from the ink channel by cleaning the print head by flushing the ink channel with a cleaning solution.

EP 0561406 describes the cleaning of a print head using a cleaning solution comprising a component of an ink that has previously been jetted by the print head. The print heads are cleaned by flushing with the cleaning solution. However, such cleaning solutions may not always remove the unwanted substances from the interior of the print head to a sufficient extent. For example, when the print heads have been used to jet droplets of a hot melt composition, the cleaning solution may not be able to remove the impurities to such extent, that the print head is fully functional again after cleaning.

It is therefore an object of the invention to provide a cleaning composition that provides satisfactory cleaning properties when used for cleaning a print head such as a hot melt print head.

It is a further object of the invention to provide a method for cleaning a print head that mitigates the above problem.

### Summary of the invention

The object is achieved in a hot melt cleaning composition, the hot melt cleaning composition being solid at room temperature and liquid at an elevated temperature, comprising a hot melt solvent, the hot melt solvent being solid at room temperature and liquid at an elevated temperature, and a hot melt vehicle composition, the hot melt vehicle composition being solid at room temperature and liquid at an elevated temperature,
wherein the hot melt solvent is selected from the group consisting of DMSO₂, ethylene carbonate, 1-tetradecanol, 1-hexadecanol, 1-octadecanol, 1-icosanol, benzoic acid, resorcinol, catechol, hydroquinone, p-toluenesulfonic acid, octadecamide, 1,6-hexanediol, phenylethylene glycol, EDTA, ethyleneglycol-bis(2-aminoethyl)-*N,N,N,N*-tetra acetic acid, diethylenetriamine penta acetic acid, *trans*-1,2-diaminocyclohexane-*N,N,N,N*-tetra acetic acid monohydrate, and a crownether,
and wherein the hot melt vehicle composition comprises a gelling agent and at least one component selected from the group consisting of a crystalline setting material and an amorphously setting material, wherein the gelling agent is selected from the group consisting of ketones and oligo-ester compounds.

In the context of the present invention, a hot melt cleaning composition is a composition that is solid at room temperature and liquid at an elevated temperature. In the context of the present invention, the hot melt vehicle composition should be construed as a hot melt ink composition, excluding its colorants (i.e. dyes and/or pigments). Preferably, the hot melt vehicle comprises at least one of the components selected from the group comprising a crystalline setting material, an amorphously setting material and a gelling agent.

### Hot melt vehicle composition

The hot melt cleaning composition according to the present invention comprises at least a hot melt vehicle composition. In the context of the present invention, a hot melt vehicle composition is a composition that is solid at room temperature and liquid at an elevated temperature. In addition, a hot melt ink composition in accordance with the present invention comprises a hot melt vehicle composition. The hot melt vehicle composition of the cleaning composition may be equal to or different from the hot melt vehicle composition of the ink composition. In ink compositions, the hot melt vehicle composition may generally function as a vehicle for the colorant and may provide the ink composition with the desired properties. For example, the vehicle composition may provide the ink, when printed onto a receiving medium with properties such as rigidity, crystallinity, scratch resistance, flexibility, etc. In addition, the vehicle composition may provide the ink with a viscosity sufficiently low for the ink to be efficiently jetted at a jetting temperature using an ink jet printing apparatus. The jetting temperature may be in the range of 80°C - 150°C.

The hot melt vehicle composition in accordance with the present invention may contain at least one base material. Depending on the desired properties of the ink and/or the cleaning composition, a suitable base material may be selected. The base material may have a melting point higher than room temperature so that the ink composition or the cleaning composition melted in the printing device is practically not subject to evaporation when the printing device is not printing.

The base material may comprise at least one of a crystalline setting material, an amorphously setting material and a gelling agent.

The hot melt vehicle composition may comprise a crystalline material. The melt viscosity of the crystalline material may also be sufficiently low, typically lower than 20 cP, at the regular jet temperatures.

Non-limiting examples of the crystalline setting material are shown in table 1.

**Table 1 Examples of crystalline setting materials**

| Compound no. | Molecular structure |
|---|---|
| **1** | 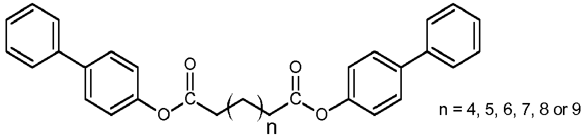 |
| **2** | 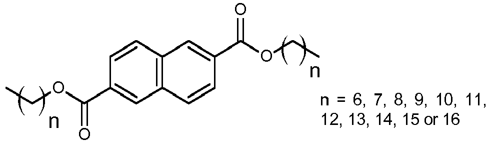 |
| **3** | 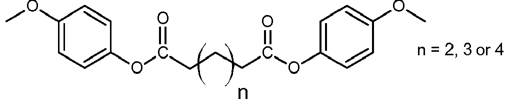 |
| **4** | 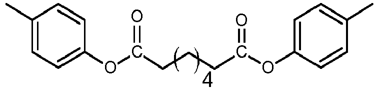 |
| **5** | 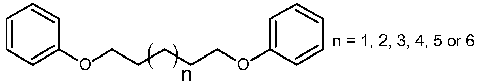 |
| **6** | 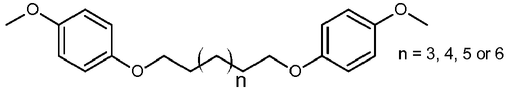 |
| **7** | 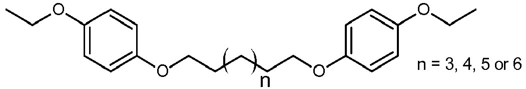 |
| **8** | 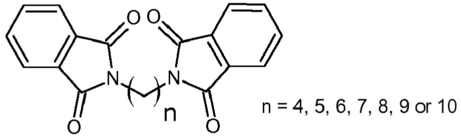 |
| **9** | 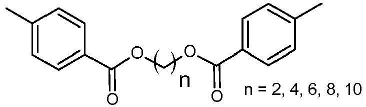 |
| **10** | 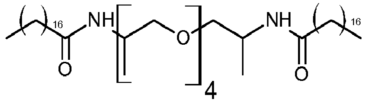 |
| **11** | 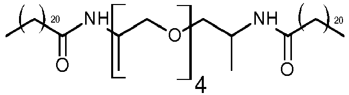 |
| **12** | 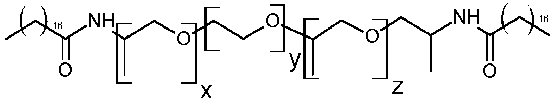 |
| | 9 ≤ x+y+z ≤ 11 |
| **13** | 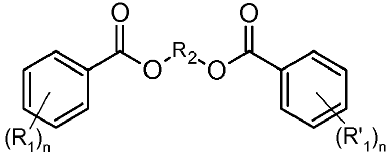 |

In compound **13**, R₁ and R'₁ are the same or different and are selected from a C1-8 alkyl or C1-8 alkoxy, R₂ is a C1-12 linear alkane diyl or a C5-12 alkane diyl which contains an alicyclic group, and n is equal to 0, 1, 2, or 3. These bis-ester compounds have melting temperatures suitable for forming a hot melt composition.

The hot melt vehicle composition in accordance with the present invention may comprise an amorphously setting material. This amorphously setting material may be for example a wax or a resin, or a combination thereof.

The use of resins in ink compositions has the advantage that dyes can be dissolved relatively well therein and pigments can be dispersed relatively easily therein.

Synthetic or natural waxes may also be used as a base material in hot melt inks. Waxes may efficiently disperse or dissolve colorants, such as pigments or dyes.

A number of non-limiting examples of resins, suitable to be used as amorphously setting material in a hot melt composition are shown in table 2:

**Table 2: Selection of commercially available amorphously setting materials**

| No. | Name (manufacturer) | chemical description | Mw (g/mol) |
|---|---|---|---|
| **20** | Foral 85E | glycerol-ester of hydrogenated rosin | 1000 |
| | (Hercules) | | |
| **21** | Foralyn 110 | pentaerythritol-ester of hydrogenated rosin | 1300 |
| | (Hercules) | | |
| **22** | Uratak 68520 | phenolic poly-α-methyl-styrene | 880 |
| | (DSM) | | |
| **23** | Dynacoll 7110 | copolyester | 2000 |
| | (Hüls) | | |
| **24** | Dynacoll 7130 | copolyester | 7100 |
| | (Hüls) | | |
| **25** | Dynacoll 7150 | copolyester | 6100 |
| | (Hüls) | | |
| **26** | Kunstharz AP | acetophenone formaldehyde condensation product | 1100 |
| | (Hüls) | | |
| **27** | Kunstharz SK | reduced acetophenone formaldehyde condensation product | 1350 |
| | (Hüls) | | |
| **28** | Kunstharz CA | cyclohexanone aldehyde condensation product | 1050 |
| | (Hüls) | | |
| **29** | Kunstharz EP-TC | ketone aldehyde condensation product | 750 |
| | (Hüls) | | |
| **30** | Setafix Z1078 | bisesteramide | 700 |

Synthetic or natural waxes may also be used as a base material in hot melt inks. Waxes may efficiently disperse or dissolve colorants, such as pigments or dyes. Non-limiting examples of waxes are polyalkylene waxes, such as polyethylene waxes or polypropylene waxes, Fischer-Tropsch waxes, carnauba wax, candelilla wax, stearamides, paraffin wax and montan wax.

The hot melt vehicle comprises a gelling agent. The gelling agent is comprised in the hot melt vehicle composition in combination with at least one of the crystalline setting material or the amorphously setting material.

A number of non-limiting examples of the gelling agent are: ketones such as laurone, stearone, di-n-dodecylketone, pyristone, 15-nonacosanone, palmitone, di-n-hexadecylketone, or oligo-ester compounds, the oligo-ester compounds being the reaction product of a poly-hydroxy component, such as pentaerythritol or glycerol and an carboxylic acid comprising an alkyl chain, such as stearic acid, palmitic acid, arachidic acid, linoleic acid or myristic acid esters..

### Hot melt solvent

In the context of the present invention, a hot melt solvent is a solvent that is solid at room temperature and liquid at an elevated temperature.

The hot melt solvent may be able to remove impurities present in the print head, for example in the ink channel of a print head. Some impurities may not dissolve in the hot melt vehicle composition or may have a low solubility in the vehicle composition. These impurities may have a higher solubility in the hot melt solvent. Therefore, addition of the hot melt solvent to the hot melt vehicle composition may result in a cleaning composition having a higher cleaning ability than the hot melt vehicle composition. Thus, impurities may be removed more efficiently by a cleaning composition comprising a hot melt solvent in addition to a hot melt vehicle composition.

Preferably, the hot melt solvent is selected based on the nature of the impurities occurring in the print head. For example, if the impurities occurring in the print head are of a polar nature, then a polar hot melt solvent may be selected.

Preferably, the viscosity of the hot melt solvent may be low. For example, the viscosity of the hot melt solvent at a temperature of 130°C may be in the range of 0.3 mPa s to 40 mPa s. By addition of a hot melt solvent having a low viscosity, to the hot melt vehicle composition, the viscosity of the hot melt cleaning composition may be lower compared to the hot melt vehicle composition. This is advantageous if droplets of the hot melt cleaning composition are jetted.

The hot melt solvent may have a melting point in the range of 25°C- 260°C, preferably from 40°C - 200°C, more preferably from 60°C - 150°C. Non-limiting examples of a hot melt solvents are DMSO₂, ethylene carbonate, 1-tetradecanol, 1-hexadecanol, 1-octadecanol, 1-icosanol, benzoic acid, resorcinol, catechol, hydroquinone, p-toluenesulfonic acid, octadecamide, 1,6-hexanediol, or phenylethylene glycol, EDTA (ethylenediaminetetraacetic acid), ethyleneglycol-bis(2-aminoethyl)-*N*,*N*,*N*,*N*-tetra acetic acid, diethylenetriamine penta acetic acid, *trans*-1,2-diamiocyclo-hexane-*N*,*N*,*N*,*N*-tetra acetic acid monohydrate, or crownethers, such as [15]crown-5, [18]crown-6 or dibenzo-[21]crown-7.

By adding a hot melt solvent to the hot melt vehicle composition, a cleaning composition may be obtained. The cleaning composition may be applied to a print head in the same way as a hot melt ink composition. Usually, a hot melt composition is provided to a print head via a melting unit of the print head. The hot melt composition may be provided to the melting unit of the print head in solid form and may be molten in the melting unit. After being molten, the hot melt composition may be provided to a part of the print head downstream of the melting unit. The hot melt cleaning composition may, in cleaning operation of the print head, be molten and may flow through the print head in the same way as a hot melt ink composition does in printing operation of the print head. Therefore, the hot melt cleaning composition may be provided to all parts of the print head that are -in printing operation of the print head- provided with the hot melt ink composition. Thus, the hot melt cleaning composition may be provided to all parts of the print-head, where the ink and/or contaminants present in the ink may be present. The residual ink and/or contaminants present in the ink composition may therefore be suitably removed by the hot melt cleaning composition that is provided to the print head in cleaning operation of the print head.

Optionally, the hot melt cleaning composition may comprise a colorant, such as a pigment or a dye. When the hot melt cleaning composition further comprises a colorant, the hot melt cleaning may be used for both printing and cleaning; the hot melt cleaning composition may be used as a cleaning-printing hot melt composition. By applying the cleaning-printing hot melt composition, a print head may be cleaned while printing. When a printer comprising a print head is in printing operation, ink may be supplied to the print head, in order to be able to apply the ink onto a receiving medium. The ink may comprise a contaminant. The contaminant may precipitate in a part of the print head. When the printer comprising the print head is in printing operation for a certain period of time and increasing amounts of ink are supplied to the print head, the contaminant may accumulate in the print head. The more contaminant is present in the print head, the higher may be the chance of malfunction of the print head. By providing the ink with the hot melt solvent, the hot melt solvent may be provided to the print head at the same intervals as the ink. Therefore, an amount of the hot melt solvent may be present in the print head, together with the ink composition comprising the contaminant. Therefore, the contaminant may be continuously removed from the print head. By continuously removing the contaminants from the print head, build up of the contaminant in the print head may be prevented and the amount of the contaminant present in the print head may be kept (very) low. Moreover, because the contaminant may be removed continuously when printing, the amount of contaminant that is ejected together with the ink onto the receiving medium may be low, such that no visible loss in print quality may be obtained.

The nature and the amount of hot melt solvent present in the cleaning-printing hot melt composition may be suitably selected based on the nature and the amount of contaminant present in the ink. The more contaminant is present, the more solvent may be needed in the cleaning-printing hot melt inkjet composition, in order to efficiently remove the contaminant when printing. By applying cleaning-printing hot melt inkjet composition to the print head, the print head may be cleaned in printing operation, such that cleaning of the print head and printing are efficiently combined.

In an embodiment, the hot melt solvent is DMSO₂, also known as dimethylsulfone, of which the chemical formula is (CH₃)₂SO₂. DMSO₂ is a compound having a melting point of 109°C. Therefore, DMSO₂ is solid at room temperature and liquid at elevated temperature. If the print head of an inkjet printing assembly is arranged to operate at a temperature of at least 109°C, then DMSO₂ may be in the liquid phase inside the print head. DMSO₂ is a polar compound. The polarity of a (hot melt) solvent is important for the ability of the (hot melt) solvent to dissolve certain impurities. In general, impurities having a high polarity need a highly polar solvent in order to be efficiently dissolved, apolar impurities need an apolar solvent in order to be efficiently dissolved.

The addition of DMSO₂ to the hot melt vehicle composition may lower the viscosity of the hot melt cleaning composition in the liquid phase, compared to the viscosity of the hot melt vehicle composition and the hot melt ink composition. A lower viscosity may be beneficial for jetting droplets of the hot melt composition. Cleaning the print head using the hot melt cleaning composition may comprise jetting droplets of the hot melt cleaning composition.

DMSO₂ may be added to a hot melt vehicle composition. DMSO₂ and the hot melt vehicle composition may be melted together, e.g. in a melting unit of an inkjet printing apparatus. Alternatively, pellets, comprising a mixture of the hot melt vehicle composition and DMSO₂ may be provided to a print head and molten. Once the mixture of the hot melt vehicle composition and DMSO₂ is molten, the resulting composition may be used to rinse the print head, and may thereby remove (colored) hot melt ink composition present in the print head and/or contaminants from the print head.

### Hot melt ink composition

The hot melt ink composition may comprise a colorant in addition to the hot melt vehicle composition. The colorant may be a dye or a pigment. The colorant may provide color to the ink composition, for example a black, a cyan, a magenta, a yellow, a red, a green, a blue, a purple or an orange color. The colorant may be fluorescent or may be non-fluorescent.

Droplets of the colored ink may be applied in a predetermined pattern to a receiving medium to provide the receiving medium with an image. One type of colored ink may be used or a plurality of differently colored inks may be applied to the receiving medium. Alternatively, a hot melt ink composition may consist essentially of the hot melt vehicle composition. Thus, the hot melt ink composition may not comprise a colorant. Such a hot melt ink composition will be further referred to as a colorless hot melt ink composition.

Generally, a hot melt ink vehicle is selected such that a colorant present in the hot melt ink composition is suitably dispersed or dissolved in the ink vehicle. Therefore, when the ink composition present in a print head has to be removed, for example when a differently colored ink is applied to the print head, the ink including the colorant may need to be removed from the print head. Because the vehicle may suitably disperse or dissolve the colorant, a colored ink composition present in a print head may be removed from said print head by rinsing the print head using a colorless hot melt ink composition. However, the ink compositions may contain impurities which are difficult to dissolve in the hot melt vehicle composition and will therefore not dissolve well in a colorless ink composition, consisting of the hot melt vehicle composition. In order to efficiently remove impurities, the cleaning composition may comprise a solvent in addition to the hot melt vehicle composition. Preferably, the solvent may be a hot melt solvent. The function and the nature of the hot melt solvent are further described above.

The hot melt vehicle composition may be suitable to be jetted by an ink jet printing apparatus. By providing the cleaning composition with the hot melt vehicle composition, the hot melt cleaning composition may be suitable to be jetted by an ink jet printing apparatus as well. Therefore, the print head may be rinsed by jetting droplets of the hot melt cleaning composition. Thus, the actuation means of the print head may be used to rinse the print head. It may not be necessary to provide the print head with additional means to rinse the print head.

Preferably, the hot melt solvent is compatible with the hot melt vehicle composition.

In an aspect of the invention, a kit for operating and cleaning an ink jet apparatus comprising a print head is provided, the kit comprising two units, wherein a first unit comprises a hot melt cleaning composition, the hot melt cleaning composition being solid at room temperature and liquid at an elevated temperature, comprising a first hot melt vehicle composition, the first hot melt vehicle composition being solid at room temperature and liquid at an elevated temperature, and a hot melt solvent, the hot melt solvent being solid at room temperature and liquid at an elevated temperature, and wherein a second unit comprises a hot melt ink composition, the hot melt ink composition being solid at room temperature and liquid at an elevated temperature, comprising a second hot melt vehicle composition, the second hot melt vehicle being solid at room temperature and liquid at an elevated temperature, and a colorant.

The kit comprising two units may be a kit comprising two holders. The holders may each contain a quantity of a hot melt composition, wherein the first holder comprises the hot melt cleaning composition and at least a second holder comprises the hot melt ink composition. In normal operation of the ink jet apparatus, the hot melt ink composition may be supplied to a print head. In case the ink jet apparatus is configured to print monochrome, then one hot melt ink composition, e.g. a black-colored hot melt ink composition may be provided to the print heads or to a plurality of print heads. In case the ink jet apparatus is configured to print using a plurality of colors, then a plurality of hot melt inks, having different colors may be provided to the print heads. For example, a black, a cyan, a magenta and a yellow hot melt ink composition may be provided, each differently colored ink being supplied to a corresponding print head.

The kit may further provide a holder comprising a hot melt cleaning composition. The hot melt cleaning composition may be provided to the ink jet apparatus for cleaning of the ink jet apparatus or parts thereof, such as the print heads. Preferably, the holder is adapted to provide the hot melt cleaning composition to each print head present in the ink jet apparatus. The hot melt cleaning composition may be provided to each of the print heads in one time or alternatively, the hot melt cleaning composition may be supplied to one of the print heads. Preferably, the hot melt supply to each of the print heads may be suitable switched from the hot melt ink composition to the hot melt cleaning composition and *vice-versa.*

Alternatively, the kit comprising two units may be a kit comprising two volume-units of hot melt composition, wherein the first unit-volume comprises the hot melt cleaning composition and a second unit-volume comprises the hot melt ink composition. The unit-volumes of the different types of hot melt composition may be positioned together in a holder. The unit-volumes may be e.g. pellets or cubes. The unit-volumes may be preferably of the same size. In case the unit-volumes of the different types of hot melt composition are positioned together in a holder, the total volume of the hot melt ink composition in the holder is preferably larger than the volume of the hot melt cleaning composition. For example, the hot melt cleaning composition may be present in 0.5 volume% to 20 volume%, based on the total volume% of the cleaning composition and the ink composition. By positioning volume-units of the two different compositions, volume-units of the compositions may be randomly provided to the ink jet apparatus. Thus, cleaning composition may be provided to the ink jet apparatus during printing. Contaminants may be removed from the print head during printing. Thus, the ink jet apparatus may be operated and cleaned at the same time. By regularly providing cleaning composition to the print head, build up of contaminants within the print head may be minimized. Moreover, since there may be only little contaminants present in the print head, the removal of these contaminants may not lead to visible decrease of the print quality. In this case, it is preferred that the hot melt cleaning composition further comprises a colorant.

By providing a hot melt cleaning composition together with hot melt ink composition in one kit, the hot melt cleaning composition may be readily available to the ink jet printing apparatus in case cleaning of one or more of the print heads is desired.

In an embodiment, the first hot melt vehicle composition is essentially the same as the second hot melt vehicle composition. When the hot melt cleaning composition and the hot melt ink composition comprise essentially the same vehicle composition, the hot melt cleaning composition and the hot melt ink composition may be compatible.

In an aspect of the invention, a method for preparing a hot melt cleaning composition according to the present invention is provided, the method comprising the steps of:
∘ providing a hot melt solvent, the hot melt solvent being solid at room temperature and liquid at an elevated temperature;
∘ providing a hot melt vehicle, the hot melt vehicle composition being solid at room temperature and liquid at an elevated temperature;
∘ melt mixing the hot melt solvent and the hot melt vehicle.

The hot melt solvent as well as the hot melt vehicle composition has to be provided. They may be provided in a liquid state or in a solid state. In case the hot melt vehicle composition comprises more than one component, then the components may be provided as a pre-mixed hot melt vehicle composition or the individual components of the hot melt vehicle composition may be provided separately. In case all the components of the hot melt cleaning composition are provided in a liquid state, the hot melt cleaning composition may be prepared by mixing the liquid components.

In case at least one of the components is in a solid state, then the at least one component in a solid state has to be molten. After the at least one component in a solid state is molten, the components may be melt mixed, thereby obtaining the hot melt cleaning composition. After the hot melt cleaning composition has been obtained, it may be solidified.

In an embodiment, the method further comprises the steps of:
∘ pouring molten hot melt cleaning composition into a mould;
∘ allowing the hot melt cleaning composition to cool down and to solidify in the mould;
∘ separating the solidified hot melt cleaning composition from the mould.

The hot melt ink composition may be molten and subsequently poured into a mould. Alternatively, the hot melt cleaning composition, prepared by melt mixing may be poured into the mould after the melt mixing process, without having solidified. The mould may have any suitable shape, such that objects of the hot melt cleaning composition having a suitable shape may be provided. The objects of the hot melt cleaning composition may be e.g. pellets or cubes.

When the molten hot melt cleaning composition has been transferred into the mould, the hot melt cleaning composition may be allowed to cool down. Active cooling for increasing the cooling rate of the hot melt ink composition may optionally be provided. After the hot melt composition has cooled down, the resulting objects of the hot melt cleaning composition may be removed from the mould.

Alternatively, the hot melt composition may be extruded.

In an aspect of the invention, a method for cleaning a print head is provided, the print head comprising a hot melt composition melting unit arranged for melting a hot melt composition, the hot melt composition being solid at room temperature and liquid at an elevated temperature and an ink channel, the melting unit being in communication with a hot melt composition feeding unit, the ink channel extending from the melting unit to an orifice of the print head, the ink channel being adapted to comprise a hot melt composition in a molten state wherein the method comprises the steps of :
∘ applying an amount of a holt melt cleaning composition, the hot melt cleaning composition being solid at room temperature and liquid at an elevated temperature, comprising a hot melt vehicle, the hot melt vehicle being solid at room temperature and liquid at an elevated temperature, and a hot melt solvent, the hot melt solvent being solid at room temperature and liquid at an elevated temperature to the melting unit of the print head;
∘ melting the hot melt composition
∘ rinsing the ink channel of the print head with the molten hot melt cleaning composition.

The hot melt cleaning composition may be fed to the melting unit and melted by the melting unit. When the hot melt cleaning composition is in a molten state, the hot melt cleaning composition may flow into the ink channel towards the orifice. The ink channel may comprise a plurality of cavities, such as, but not limited to, a pressure chamber, where pressure may be build up for ejection of a droplet, a pressure equalization chamber for damping pressure oscillations within the ink channel. Moreover, the ink channel may comprise a filter for filtering unwanted substances, such as particles exceeding a certain size, from the hot melt composition. In order to efficiently clean the print head, it is preferred that the hot melt cleaning composition reaches all parts of the ink channel and replaces any contaminants and/or any remainder ink that is present in the ink channel. Preferably, the ink channel is rinsed such that the hot melt cleaning composition that has reaches the parts of the ink channel is allowed to flow out of said parts of the print head and to be replaced by fresh hot melt cleaning composition. By refreshing the cleaning composition, the ink channel may be rinsed more efficiently and more contaminant may be removed. The hot melt composition may exit the ink channel via the orifice. Therefore, any contaminant present near the orifice may be removed by rinsing the print head.

Rinsing of the ink channel of the print head may be performed e.g. by applying a pressure pulse the print head containing the molten hot melt cleaning composition, for example an actuation pulse or a purge pulse. Optionally, the pressure pulse may be combined with a wiping operation, during which the orifice plate of the print head is wiped. Alternatively, the print head may be rinsed by applying an under pressure to the print head via an exterior pressure source via the orifice. In another alternative, the print head may be rinsed by applying an over pressure to the print head via the ink channel at the side of the melting unit. Alternatively, the cleaning solution may undergo a number of cycles of cooling down and warming up in the print head. When the components present in the print head have different thermal expansion coefficients, cooling down and warming up may remove impurities from the print head.

The cleaning composition in a molten state has an elevated temperature. Generally, solubility of compounds increases upon increasing temperature. Thus, by applying a hot melt cleaning composition, which may be only in a molten state when it is at an elevated temperature, impurities may be more efficiently removed because of the improved solubility at the elevated temperatures.

Cleaning of print heads may take place at predetermined intervals. This is also known as preventive cleaning. Alternatively, or in combination with preventive cleaning, the print heads may be cleaned when malfunctioning of the print head is detected. This is also known as corrective cleaning.

In addition, the method for cleaning a print head using the hot melt cleaning composition may also be used to rinse the print head in case ink has to be removed from the print head in order to be able to supply another color of ink to the print head, or when the ink contents of a print head has been contaminated by erroneously supplied ink of a different color. When printing the newly supplied ink, it is unwanted if the previous, differently colored ink is still present in the print head in some amount, because this may lead to color differences in a print.

In an embodiment, the orifice is arranged in an orifice plate comprising a plurality of orifices and the method further comprises:
∘ purging the orifice with the hot melt cleaning composition and wiping the orifice plate.

By purging the orifice, remaining ink and/or contaminants may be removed from the inside of the orifice and from the part of the ink channel surrounding the orifice. However, remaining ink and/or contaminants that are present in vicinity of the orifice at the outside of the print head may not be removed by purging the orifice. Therefore, it is beneficial to clean the orifice plate as well. This may be done efficiently by wiping the orifice plate. Wiping the orifice plate may remove contaminants and/or remaining ink from the orifice plate. Thus by purging and wiping, the contaminants and/or remaining ink can be removed from the ink channel and the inside of the orifice as well as from the outside of the orifice and the orifice plate. As a consequence, all unwanted substances may be removed from the print head.

Preferably, the purging of the orifice and the wiping of the orifice plate are repeated a number of times. It may happen that ink and/or contaminants enter the orifice, when the orifice plate is wiped. These contaminants and/or ink may then subsequently be removed by purging. By repeating the purging and the wiping step a number of times, contaminants and/or remaining ink may be efficiently removed from both the inside and the outside of the print head.

Purging of the ink channel of the print head may be performed e.g. by actuating the print head containing the molten hot melt cleaning composition. Alternatively, purging may be performed by applying a pressure provided by an external pressure source to one end of the ink channel.

Optionally, hot melt cleaning composition may also be applied to the print head externally, in addition to flushing the print head. This may be done for example by applying the hot melt cleaning composition to the orifice plate. In an embodiment, the hot melt cleaning composition may be applied to the orifice plate by contacting the orifice plate with the hot melt cleaning composition, for example by rubbing the orifice plate with a stick comprising the hot melt cleaning composition, or by contacting the orifice plate against the surface of a block comprising the hot melt cleaning composition. In operation, the orifice plate may be at elevated temperature, because the hot melt compositions need to be at elevated temperature in order to be jetted. When the hot melt composition contacts the orifice plate, a part of the hot melt composition may melt and consequently, the orifice plate may be provided with the molten cleaning composition. By applying the hot melt cleaning composition also externally, the exterior of the print head, for example the orifice plate may be cleaned.

### Brief description of the drawings

Fig. 1A shows a schematic representation of an image forming apparatus.
Fig. 1B shows an ink jet printing assembly
Fig 2 shows a schematic view of a print head.

### Detailed description of the drawings

In the drawings, same reference numerals refer to same elements.

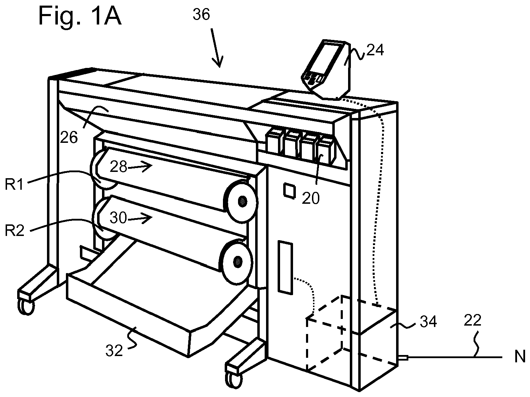

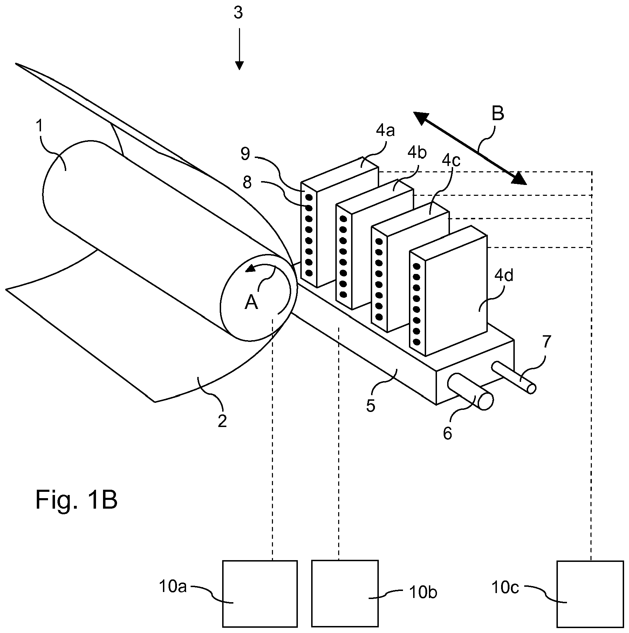

Fig. 1A shows an image forming apparatus 36, wherein printing is achieved using a wide format inkjet printer. The wide-format image forming apparatus 36 comprises a housing 26, wherein the printing assembly, for example the ink jet printing assembly shown in Fig. 1B is placed. The image forming apparatus 36 also comprises a storage means for storing image receiving member 28, 30, a delivery station to collect the image receiving member 28, 30 after printing and storage means for marking material 20. In Fig. 1A, the delivery station is embodied as a delivery tray 32. Optionally, the delivery station may comprise processing means for processing the image receiving member 28, 30 after printing, e.g. a folder or a puncher. The wide-format image forming apparatus 36 furthermore comprises means for receiving print jobs and optionally means for manipulating print jobs. These means may include a user interface unit 24 and/or a control unit 34, for example a computer.

Images are printed on a image receiving member, for example paper, supplied by a roll 28, 30. The roll 28 is supported on the roll support R1, while the roll 30 is supported on the roll support R2. Alternatively, cut sheet image receiving members may be used instead of rolls 28, 30 of image receiving member. Printed sheets of the image receiving member, cut off from the roll 28, 30, are deposited in the delivery tray 32.

Each one of the marking materials for use in the printing assembly are stored in holders 20 arranged in fluid connection with the respective print heads for supplying marking material to said print heads. The holders 20 may contain a marking material, e.g. a hot melt ink composition. Different ones of the holders 20 may comprise a differently colored hot melt ink composition, for example a cyan, a magenta, a yellow or a black ink composition. Moreover, one of the holders 20 may comprise a hot melt cleaning composition according to the present invention. In normal operation, the image forming apparatus may print images onto an image receiving member by applying droplets of the hot melt ink composition onto the image receiving member. In cleaning operation of the image forming apparatus, a quantity of the hot melt cleaning composition may be supplied to at least one of the print heads (not shown) for flushing the print head.

The local user interface unit 24 is integrated to the print engine and may comprise a display unit and a control panel. Alternatively, the control panel may be integrated in the display unit, for example in the form of a touch-screen control panel. The local user interface unit 24 is connected to a control unit 34 placed inside the printing apparatus 36. The control unit 34, for example a computer, comprises a processor adapted to issue commands to the print engine, for example for controlling the print process. The image forming apparatus 36 may optionally be connected to a network N. The connection to the network N is diagrammatically shown in the form of a cable 22, but nevertheless, the connection could be wireless. The image forming apparatus 36 may receive printing jobs via the network. Further, optionally, the controller of the printer may be provided with a USB port, so printing jobs may be sent to the printer via this USB port.

Fig. 1B shows an ink jet printing assembly 3. The ink jet printing assembly 3 comprises supporting means for supporting an image receiving member 2. The supporting means are shown in Fig. 1B as a platen 1, but alternatively, the supporting means may be a flat surface. The platen 1, as depicted in Fig. 1B, is a rotatable drum, which is rotatable about its axis as indicated by arrow A. The supporting means may be optionally provided with suction holes for holding the image receiving member in a fixed position with respect to the supporting means. The ink jet printing assembly 3 comprises print heads 4a - 4d, mounted on a scanning print carriage 5. The scanning print carriage 5 is guided by suitable guiding means 6, 7 to move in reciprocation in the main scanning direction B. Each print head 4a - 4d comprises an orifice surface 9, which orifice surface 9 is provided with at least one orifice 8. The print heads 4a - 4d are configured to eject droplets of marking material onto the image receiving member 2. The platen 1, the carriage 5 and the print heads 4a - 4d are controlled by suitable controlling means 10a, 10b and 10c, respectively.

The image receiving member 2 may be a medium in web or in sheet form and may be composed of e.g. paper, cardboard, label stock, coated paper, plastic or textile. Alternatively, the image receiving member 2 may also be an intermediate member, endless or not. Examples of endless members, which may be moved cyclically, are a belt or a drum. The image receiving member 2 is moved in the sub-scanning direction A by the platen 1 along four print heads 4a - 4d provided with a fluid marking material.

A scanning print carriage 5 carries the four print heads 4a - 4d and may be moved in reciprocation in the main scanning direction B parallel to the platen 1, such as to enable scanning of the image receiving member 2 in the main scanning direction B. Only four print heads 4a - 4d are depicted for demonstrating the invention. In practice an arbitrary number of print heads may be employed. In any case, at least one print head 4a - 4d per color of marking material is placed on the scanning print carriage 5. For example, for a black-and-white printer, at least one print head 4a - 4d, usually containing black marking material is present. Alternatively, a black-and-white printer may comprise a white marking material, which is to be applied on a black image-receiving member 2. For a full-color printer, containing multiple colors, at least one print head 4a - 4d for each of the colors, usually black, cyan, magenta and yellow is present. Often, in a full-color printer, black marking material is used more frequently in comparison to differently colored marking material. Therefore, more print heads 4a - 4d containing black marking material may be provided on the scanning print carriage 5 compared to print heads 4a - 4d containing marking material in any of the other colors. Alternatively, the print head 4a - 4d containing black marking material may be larger than any of the print heads 4a - 4d, containing a differently colored marking material.

The carriage 5 is guided by guiding means 6, 7. These guiding means 6, 7 may be rods as depicted in Fig. 1B. The rods may be driven by suitable driving means (not shown). Alternatively, the carriage 5 may be guided by other guiding means, such as an arm being able to move the carriage 5. Another alternative is to move the image receiving material 2 in the main scanning direction B.

Each print head 4a - 4d comprises an orifice surface 9 having at least one orifice 8, in fluid communication with a pressure chamber containing fluid marking material provided in the print head 4a - 4d. On the orifice surface 9, a number of orifices 8 is arranged in a single linear array parallel to the sub-scanning direction A. Eight orifices 8 per print head 4a - 4d are depicted in Fig. 1B, however obviously in a practical embodiment several hundreds of orifices 8 may be provided per print head 4a - 4d, optionally arranged in multiple arrays. As depicted in Fig. 1B, the respective print heads 4a - 4d are placed parallel to each other such that corresponding orifices 8 of the respective print heads 4a - 4d are positioned in-line in the main scanning direction B. This means that a line of image dots in the main scanning direction B may be formed by selectively activating up to four orifices 8, each of them being part of a different print head 4a - 4d. This parallel positioning of the print heads 4a - 4d with corresponding in-line placement of the orifices 8 is advantageous to increase productivity and/or improve print quality. Alternatively multiple print heads 4a - 4d may be placed on the print carriage adjacent to each other such that the orifices 8 of the respective print heads 4a - 4d are positioned in a staggered configuration instead of in-line. For instance, this may be done to increase the print resolution or to enlarge the effective print area, which may be addressed in a single scan in the main scanning direction. The image dots are formed by ejecting droplets of marking material from the orifices 8.

Upon ejection of the marking material, some marking material may be spilled and stay on the orifice surface 9 of the print head 4a - 4d. The ink present on the orifice surface 9, may negatively influence the ejection of droplets and the placement of these droplets on the image receiving member 2. Therefore, it may be advantageous to remove excess of ink from the orifice surface 9. The excess of ink may be removed for example by wiping with a wiper and/or by application of a suitable anti-wetting property of the surface, e.g. provided by a coating.

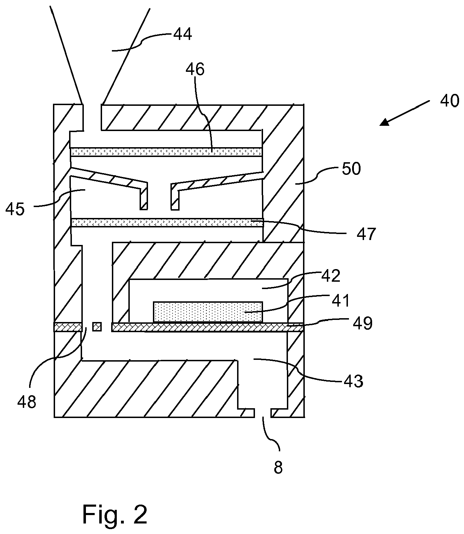

Fig. 2 shows a schematic view of a print head 40. The print head has a print head body 50. The print head 40 comprises at least one orifice 8. One orifice 8 is shown in Fig. 2. Via the orifice 8, droplets of a fluid, such as a molten hot melt composition may be jetted. The print head 40 comprises a hot melt melting unit 44. The hot melt melting unit 44 is adapted to melt a hot melt composition in a solid state. The melting unit 44 is provided with heating means (not shown). The hot melt composition, which may be hot melt cleaning composition or hot melt ink composition may be fed to the melting unit 44 via a hot melt feeding unit (not shown) that feeds quantities of solid hot melt composition to the melt unit 44. After the hot melt composition has been molten, the hot melt composition may enter the ink channel and flow towards a first filter 46. The ink channel is the part of the print head 40 that may contain ink and extends from the melting unit 44 to the orifice 8. The first filter 46 is provided to remove contaminants from the hot melt composition, thereby preventing these contaminants to be transferred towards the orifice 8. The first filter 46 may selectively retain contaminants, for example based on their particle size. After the hot melt composition has passed the first filter 46, the hot melt composition arrives at the ink reservoir 45. The ink reservoir 45 serves as a buffer, such that enough hot melt composition is available to allow jetting of the composition. Optionally, the ink reservoir 45 may be provided with a level sensor (not shown) which monitors the level of hot melt composition in the ink reservoir 45. Based on the level of hot melt composition, it may be decided whether hot melt composition should be molten by the melting unit 44 or not. The print head 40 as shown in Fig 2. comprises a second filter 47. This second filter 47 is optional. It may be provided to add an additional filter step, such that more contaminant may be retained and not be transferred to the orifice 8. The first and the second filter 46, 47 may be filters of the same type or may be filters of a different type. For example, a filter may selectively retain particles exceeding a certain size, or may selectively retain particles having a charge. After the molten hot melt composition has passed the second filter 47, the composition may flow through the ink channel towards a flow restriction 48.

After the molten hot melt composition has passed the flow restriction 48, the hot melt composition arrives in the part of the ink channel in close proximity to the actuating means 41. This part of the ink channel is referred to as pressure chamber 43. The pressure chamber 43 is situated downstream with respect to the flow restriction 48 and upstream with respect to the nozzle 8. The pressure chamber 43 is separated from the actuation means 41 by a flexible membrane 49. At a side of the membrane 49 opposite to the pressure chamber 43, an actuation means 41 is provided. The actuation means 41 may be for example a piezoelectric element. The actuation means 41 is driven by suitable driving means (not shown). In operation, the actuation means 41 provide a force to the liquid present at the opposite side of the membrane 49. Because of this force, a pressure wave may be generated in the liquid. This pressure wave may result in the ejection of a droplet of fluid through the orifice 8. The flow restriction 48 forms a restriction the pressure chamber 43 and the part of the ink channel upstream from the flow restriction 48. The flow restriction 48 may damp pressure fluctuations outside of the pressure chamber 43.

### Experiments and examples

### Materials

Cleaning experiments were performed using Oce Colorwave 600 print heads that had been incorporated into an Oce Colorwave 600 printer that had been running for 1500 hours, wherein the print heads had been containing cyan hot melt ink (Oce tonerpearls cyan). The Oce Colorwave 600 print heads each contained a number of nozzles not functioning properly.

DMSO₂ was obtained from Sigma-Aldrich. All chemicals were used as received, unless stated otherwise.

### Methods

### Print head cleaning test

The cleaning tests were carried out as follows:
The print heads, comprising nozzle arrays comprising 256 nozzles, and containing cyan hot melt ink, were tested and the number of malfunctioning nozzles was determined. After this test was performed, the ink present in the print head was removed by jetting droplets of the ink. However, some ink remained in the print head after jetting had finished.

In a subsequent step, a hot melt composition was added to the print head by adding 51 grams of hot melt composition to the melting unit and melting these pearls. The print heads were operated at a temperature of 130°C.

A rinsing step was performed as follows: 17 grams of the hot melt composition was provided to the melting unit and molten. The hot melt composition was jetted by applying an actuation pulse until all hot melt composition was removed from the print head by jetting. Three rinsing steps were performed. After every rinsing step, the number of malfunctioning nozzles was determined. A nozzle was considered to be malfunctioning, when it was not jetting at all upon application of a pressure pulse or when the jet angle deviated more than 1.5°.

### Production example 1

### Preparation of cleaning composition

Hot melt cleaning composition was prepared by melt mixing 80 grams of the carrier material of the Océ Colorwave 600 hot melt ink with 20 grams of DMSO₂. The carrier material of the Océ Colorwave 600 hot melt ink corresponds to the hot melt composition excluding the colorant.

After the carrier material and DMSO₂ were melt mixed, the resulting cleaning composition was formed into spheres having a diameter of 1.2 cm and solidified.

### Comparative production examples

As a comparative example, a hot melt composition consisting of the carrier material of the Océ Colorwave 600 was used. This comparative example is referred to as **CE 2.** As a second comparative example, the black Océ Colorwave 600 hot melt ink composition was used. This comparative example is referred to as **CE 1.**

### Cleaning example and comparative cleaning example

### Cleaning example 1

In a first cleaning experiment, the effect of the cleaning procedure using a hot melt cleaning composition according to the present invention, on the number of functioning nozzles was studied. The results are shown in table 3.

**Table 3:**

| cleaning composition | nr functioning nozzles at start cleaning test | nr functioning nozzles after rinsing step 1 | nr functioning nozzles after rinsing step 2 | nr functioning nozzles after rinsing step 3 |
|---|---|---|---|---|
| **1** | 244 | 254 | 256 | 256 |

Before the cleaning procedure was started, 244 of the 256 nozzles of the print head were functioning. This means that 12 of the 256 nozzles of the print head were not functioning at all or were not functioning according to the requirements. By performing a first rinsing step using the hot melt cleaning composition **1,** and testing the print head afterwards, it was found that 10 out of the 12 nozzles that were not functioning properly, performed within the required specifications. After a second rinsing step was performed using hot melt cleaning composition **1,** all nozzles were functioning properly.

Thus, by cleaning the print head by rinsing the ink channel with the hot melt cleaning composition according to the present invention, non-functioning nozzles may be revived.

### Comparative cleaning experiment 1

In the first cleaning experiment, also the effect of the cleaning procedure using a comparison experiments **CE 1** and **CE 2,** on the number of functioning nozzles was studied. The results are shown in table 4.

**Table 4:**

| cleaning composition | nr functioning nozzles at start cleaning test | nr functioning nozzles after rinsing step 1 | nr functioning nozzles after rinsing step 2 | nr functioning nozzles after rinsing step 3 |
|---|---|---|---|---|
| **CE 1** | 196 | 205 | 241 | 251 |
| **CE 2** | 171 | 227 | 235 | 256 |

Before the cleaning procedure was started, 196, resp. 171 of the 256 nozzles of the print head were functioning properly. The print head having 196 out of 256 nozzles functioning properly was rinsed using the hot melt composition **CE 1,** which corresponds to the composition of the Océ Colorwave 600 black toner pearls. The print head having 171 out of 256 nozzles functioning properly was rinsed using the hot melt composition **CE 2.**

Cleaning the print head using **CE 1** resulted in an increase of the number of properly functioning nozzles from 196 to 205 in a first rinsing step. In a second rinsing step, the number of properly functioning nozzles increased further to 214 and 215 after a second and a third rinsing step, resp. Thus, the operation of 55 out of 60 nozzles that were not functioning properly before the cleaning procedure was carried out was restored. However, 5 nozzles were not restored.

Cleaning the print head using **CE 2** resulted in an increase of the number of properly functioning nozzles from 171 to 227 in a first rinsing step. In a second rinsing step, the number of properly functioning nozzles increased further to 235 and 256 after a second and a third rinsing step, resp. Thus, all nozzles that were not functioning properly before the cleaning procedure was carried out, were restored.

In summary, the hot melt cleaning composition according to the present invention is able to clean the print head and to restore the jetting performance of nozzles that were not functioning properly, or were not even functioning at all. The performance of the nozzles was restored in a lower number of rinsing steps, compared to other hot melt compositions.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed. Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

## Claims

1. Hot melt cleaning composition, the hot melt cleaning composition being solid at room temperature and liquid at an elevated temperature, comprising a hot melt solvent, the hot melt solvent being solid at room temperature and liquid at an elevated temperature, and a hot melt vehicle composition, the hot melt vehicle composition being solid at room temperature and liquid at an elevated temperature,
wherein the hot melt solvent is selected from the group consisting of DMSO₂, ethylene carbonate, 1-tetradecanol, 1-hexadecanol, 1-octadecanol, 1-icosanol, benzoic acid, resorcinol, catechol, hydroquinone, p-toluenesulfonic acid, octadecamide, 1,6-hexanediol, phenylethylene glycol, EDTA, ethyleneglycol-bis(2-aminoethyl)-*N*,*N*,*N*,*N-*tetra acetic acid, diethylenetriamine penta acetic acid, *trans*-1,2-diamiocyclo-hexane-*N,N,N,N*-tetra acetic acid monohydrate, and a crownether,
and wherein the hot melt vehicle composition comprises a gelling agent and at least one component selected from the group consisting of a crystalline setting material and an amorphously setting material, wherein the gelling agent is selected from the group consisting of ketones and oligo-ester compounds.

2. Hot melt cleaning composition according to claim 1, wherein the hot melt vehicle composition comprises a crystalline setting material, the crystalline setting material being selected from an ester of benzoic acid, an ester of a benzoic-acidderivative, alcohols, sulphonamides, bis-urethanes and amides.

3. Hot melt cleaning composition according to any one of the claims 1 - 2, wherein the hot melt vehicle composition comprises an amorphously setting material, and wherein the amorphously setting material has a glass transition temperature (Tg) of 10 - 50°C, a viscosity less than 100 mPa.s at 150°C and a molecular weight lower than 1000 gram/mole.

4. Hot melt cleaning composition according to any one of the claims 1 - 3, wherein the hot melt cleaning composition consists of a hot melt solvent and a hot melt vehicle composition.

5. Hot melt cleaning composition according to any one of the claims 1 - 4, wherein the hot melt solvent is liquid at a jetting temperature of the hot melt cleaning composition.

6. Hot melt cleaning composition according to any of the preceding claims, wherein hot melt solvent is dimethyl sulfone .

7. Kit for operating and cleaning an ink jet apparatus comprising a print head, the kit comprising two units, wherein a first unit comprises a hot melt cleaning composition, the hot melt cleaning composition being solid at room temperature and liquid at an elevated temperature, comprising a first hot melt vehicle composition, the first hot melt vehicle composition being solid at room temperature and liquid at an elevated temperature, and a hot melt solvent, the hot melt solvent being solid at room temperature and liquid at an elevated temperature, and wherein a second unit comprises a hot melt ink composition, the hot melt ink composition being solid at room temperature and liquid at an elevated temperature, comprising a second hot melt vehicle composition, the second hot melt vehicle being solid at room temperature and liquid at an elevated temperature, and a colorant.

8. Kit according to claim 7, wherein the first hot melt vehicle composition is essentially the same as the second hot melt vehicle composition.

9. Method for preparing a hot melt cleaning composition according to any of the claims 1 - 6, the method comprising the steps of:
∘ providing a hot melt solvent, the hot melt solvent being solid at room temperature and liquid at an elevated temperature;
∘ providing a hot melt vehicle composition, the hot melt vehicle composition being solid at room temperature and liquid at an elevated temperature;
∘ melt mixing the hot melt solvent and the hot melt vehicle composition.

10. Method according to claim 9, wherein the method further comprises the steps of:
∘ pouring molten hot melt cleaning composition into a mould
∘ allowing the hot melt cleaning composition to cool down and to solidify in the mould;
∘ separating the solidified hot melt cleaning composition from the mould.

11. Method for cleaning a print head, the print head comprising a hot melt composition melting unit arranged for melting a hot melt composition, the hot melt composition being solid at room temperature and liquid at an elevated temperature and an ink channel, the melting unit being in communication with a hot melt composition feeding unit, the ink channel extending from the melting unit to an orifice of the print head, the ink channel being adapted to comprise a hot melt composition in a molten state wherein the method comprises the steps of :
∘ applying an amount of a holt melt cleaning composition, the hot melt cleaning composition being solid at room temperature and liquid at an elevated temperature, comprising a hot melt vehicle, the hot melt vehicle being solid at room temperature and liquid at an elevated temperature, and a hot melt solvent, the hot melt solvent being solid at room temperature and liquid at an elevated temperature to the melting unit of the print head;
∘ melting the hot melt composition
∘ rinsing the ink channel of the print head with the molten hot melt cleaning composition.

12. Method according to 11 wherein the orifice is arranged in an orifice plate comprising a plurality of orifices, and wherein the method further comprises:
∘ purging the orifice with the hot melt cleaning composition and wiping the orifice plate.

13. Use of a hot melt cleaning composition, the hot melt cleaning composition being solid at room temperature and liquid at an elevated temperature, comprising a hot melt solvent, the hot melt solvent being solid at room temperature and liquid at an elevated temperature, and a hot melt vehicle, the hot melt vehicle being solid at room temperature and liquid at an elevated temperature, for cleaning print heads.

## Patentansprüche

1. Heißschmelzende Reinigungszusammensetzung, welche heißschmelzende Reinigungszusammensetzung bei Zimmertemperatur fest und bei einer erhöhten Temperatur flüssig ist, mit einem heißschmelzenden Lösungsmittel welches Heißschmelz-Lösungsmittel bei Zimmertemperatur fest und bei einer erhöhten Temperatur flüssig ist, und mit einer heißschmelzenden Trägerzusammensetzung, wobei die heißschmelzende Trägerzusammensetzung bei Zimmertemperatur fest und bei einer erhöhten Temperatur flüssig ist,
wobei das heißschmelzende Lösungsmittel ausgewählt ist aus der Gruppe bestehend aus DMSO₂, Ethylencarbonat, 1-Tetradecanol, 1-Hexadecanol, 1-Octadecanol, 1-Icosanol, Benzoesäure, Resorcin, Cathechinsäure, Hydrochinon, p-Toluolsulfonsäure, Octadecanamid, 1-6-Hexandiol, Phenylethylenglycol, EDTA, Ethylenglycol-bis(2-aminoethyl)-N,N, N, N-Tetraessigsäure, Diethylentriaminpentaessigsäure, Trans-1,2-Diaminocyclohexan-N,N,N,N-Tetraessigsäure-Monohydrat, und Kronether,
und wobei die heißschmelzende Trägerzusammensetzung ein Geliermittel und wenigstens eine Komponente enthält, die ausgewählt ist aus der Gruppe bestehend aus einem kristallinen abbindenden Material und einem amorph abbindenden Material, wobei das Geliermittel ausgewählt ist aus der Gruppe bestehend Ketonen und Oligoester-Verbindungen.

2. Heißschmelzende Reinigungszusammensetzung nach Anspruch 1, bei der die heißschmelzende Trägerzusammensetzung ein kristallines abbindendes Material enthält, das kristalline abbindende Material ausgewählt ist aus einem Ester von Benzoesäure, einem Ester eines Benzoesäurederivats, Alkoholen, Sulfonamiden, Bis-Urethanen und Amiden.

3. Heißschmelzende Reinigungszusammensetzung nach einem der Ansprüche 1 bis 2, bei der die heißschmelzende Trägerzusammensetzung ein amorphes abbindendes Material enthält und bei der das amorphe abbindende Material eine GlasÜbergangstemperatur (Tg) von 10 bis 50°C, eine Viskosität von weniger als 100 mPa.s bei 150°C und ein Molekulargewicht von weniger als 1000 g/mol hat.

4. Heißschmelzende Reinigungszusammensetzung nach einem der Ansprüche 1 bis 3, bei der die heißschmelzende Reinigungszusammensetzung aus einem heißschmelzenden Lösungsmittel und einer heißschmelzenden Trägerzusammensetzung besteht.

5. Heißschmelzende Reinigungszusammensetzung nach einem der Ansprüche 1 bis 4, bei der das heißschmelzende Lösungsmittel bei einer Strahltemperatur der heißschmelzenden Reinigungszusammensetzung flüssig ist.

6. Heißschmelzende Reinigungszusammensetzung nach einem der vorstehendenden Ansprüche, bei der das heißschmelzende Lösungsmittel Dimethylsulfon ist.

7. Kit zum Betreiben und Reinigen einer Tintenstrahlvorrichtung, die einen Drucckopf aufweist, wobei das Kit zwei Einheiten umfasst, wobei eine erste Einheit eine heißschmelzende Reinigungszusammensetzung umfasst, die heißschmelzende Reinigungszusammensetzung bei Zimmertemperatur fest und bei einer erhöhten Temperatur flüssig ist, enthaltend eine erste heißschmelzende Trägerzusammensetzung, wobei die erste heißschmelzende Trägerzusammensetzung bei Zimmertemperatur fest und bei einer erhöhten Temperatur flüssig ist, und ein heißschmelzendes Lösungsmittel, wobei das heißschmelzende Lösungsmittel bei Zimmertemperatur fest und bei einer erhöhten Temperatur flüssig ist, und wobei eine zweite Einheit eine heißschmelzende Tintenzusammensetzung umfasst, die heißschmelzende Tintenzusammensetzung bei Zimmertemperatur fest und bei einer erhöhten Temperatur flüssig ist, enthaltend eine zweite heißschmelzende Trägerzusammensetzung, wobei die zweite heißschmelzende Trägerzusammensetzung bei Zimmertemperatur fest und bei einer erhöhten Temperatur flüssig ist, und ein Färbemittel.

8. Kit nach Anspruch 7, bei dem die erste heißschmelzende Trägerzusammensetzung im wesentlichen die gleiche ist wie die zweite heißschmelzende Trägerzusammensetzung.

9. Verfahren zur Zubereitung einer heißschmelzenden Reinigungszusammensetzung nach einem der Ansprüche 1 bis 6, welches Verfahren die folgenden Schritte umfasst:
- bereitstellen eines heißschmelzenden Lösungsmittels, wobei das heißschmelzende Lösungsmittel bei Zimmertemperatur fest und bei einer erhöhten Temperatur flüssig ist,
- bereitstellen einer heißschmelzenden Trägerzusammensetzung, wobei die heißschmelzende Trägerzusammensetzung bei Zimmertemperatur fest und bei einer erhöhten Temperatur flüssig ist,
- mischen des heißschmelzenden Lösungsmittels und der heißschmelzenden Trägerzusammensetzung in der Schmelze.

10. Verfahren nach Anspruch 9, bei dem das Verfahren weiterhin die folgenden Schritte umfasst:
- eingießen der geschmolzenen heißschmelzenden Reinigungszusammensetzung in eine Form.
- abkühlen und erstarren lassen der heißschmelzenden Reinigungszusammensetzung in der Form;
- trennen der erstarrten heißschmelzenden Reinigungszusammensetzung von der Form.

11. Verfahren zum Reinigen eines Druckkopfes, wobei der Druckkopf eine Schmelzeinheit für eine heißschmelzende Zusammensetzung aufweist, welche Schmelzeinheit dazu ausgebildet ist, eine heißschmelzende Zusammensetzung zu schmelzen, wobei die heißschmelzende Zusammensetzung bei Zimmertemperatur fest und bei einer erhöhten Temperatur flüssig ist, wobei der Druckkopf einen Tintenkanal aufweist, die Schmelzeinheit mit einer Zufuhrheit für eine heißschmelzende Zusammensetzung verbunden ist, der Tintenkanal sich von der Schmelzeinheit zu einer Öffnung des Druckkopfes erstreckt, der Tintenkanal dazu ausgebildet ist, eine heißschmelzende Zusammensetzung in einem geschmolzenem Zustand aufzunehmen, welches Verfahren die folgenden Schritte umfasst:
- eintragen einer Menge einer heißschmelzenden Reinigungszusammensetzung, welche heißschmelzende Reinigungszusammensetzung bei Zimmertemperatur fest und bei einer erhöhten Temperatur flüssig ist, und einen heißschmelzenden Träger, wobei der heißschmelzende Träger bei Zimmertemperatur fest und bei einer erhöhten Temperatur flüssig ist, und ein heißschmelzendes Lösungsmittel enthält, wobei das heißschmelzende Lösungsmittel bei Zimmertemperatur fest und bei einer erhöhten Temperatur flüssig ist, in die Schmelzeinheit des Druckkopfes;
- schmelzen der heißschmelzenden Zusammensetzung
- spülen des Tintenkanals des Druckkopfes mit der geschmolzenen heißschmelzenden Reinigungszusammensetzung.

12. Verfahren nach Anspruch 11, bei dem die Öffnung in einer Düsenplatte gebildet ist, die eine Vielzahl von Öffnungen aufweist, und wobei das Verfahren weiterhin umfasst:
- spülen der Öffnung mit der heißschmelzenden Reinigungszusammensetzung und abwischen der Düsenplatte.

13. Verwendung einer heißschmelzenden Reinigungszusammensetzung, wobei die heißschmelzende Reinigungszusammensetzung bei Zimmertemperatur fest und bei einer erhöhten Temperatur flüssig ist, enthaltend ein heißschmelzendes Lösungsmittel, wobei das heißschmelzende Lösungsmittel bei Zimmertemperatur fest und bei einer erhöhten Temperatur flüssig ist, und einen heißschmelzenden Träger, wobei der heißschmelzende Träger bei Zimmertemperatur fest und bei einer erhöhten Temperatur flüssig ist, zum Reinigen von Druckköpfen.

## Revendications

1. Composition de nettoyage thermofusible, la composition de nettoyage thermofusible étant solide à température ambiante et liquide à une température élevée, comprenant un solvant thermofusible, le solvant thermofusible étant solide à température ambiante et liquide à une température élevée, et une composition véhicule thermofusible, la composition véhicule thermofusible étant solide à température ambiante et liquide à une température élevée,
dans laquelle le solvant thermofusible est sélectionné à partir du groupe constitué par du DMSO₂, du carbonate d'éthylène, du 1-tétradécanol, du 1-hexadécanol, du1-octadécanol, du 1-icosanol, de l'acide benzoïque, du résorcinol, du catéchol, de l'hydroquinone, de l'acide p-toluènesulfonique, de l'octadécamide, du 1,6-hexanediol, du phényléthylène glycol, de l'EDTA, de l'acide éthylèneglycol-bis(2-aminoéthyl)-*N*,*N*,*N*,*N*-tétraacétique, de l'acide diéthylènetriamine pentaacétique, du monohydrate d'acide *trans*-1,2-diamiocyclohexane-*N,N,N,N,N*-tétraacétique, et de l'éther couronne,
et dans laquelle la composition véhicule thermofusible comprend un agent gélifiant et au moins un composant sélectionné à partir du groupe constitué par un matériau de fixation cristalline et un matériau de fixation amorphe, l'agent gélifiant étant sélectionné à partir du groupe constitué par des cétones et des composés d'oligo-ester.

2. Composition de nettoyage thermofusible selon la revendication 1, dans laquelle la composition véhicule thermofusible comprend un matériau de fixation cristalline, le matériau de fixation cristalline étant sélectionné à partir d'un ester d'acide benzoïque, d'un ester d'un dérivé d'acide benzoïque, d'alcools, de sulfonamides, de bis-uréthanes et d'amides.

3. Composition de nettoyage thermofusible selon l'une quelconque des revendications 1 et 2, dans laquelle la composition véhicule thermofusible comprend un matériau de fixation amorphe, et dans laquelle le matériau de fixation amorphe a une température de transition vitreuse (Tg) de 10 à 50 °C, une viscosité inférieure à 100 mPa.s à 150 °C et un poids moléculaire inférieur à 1 000 grammes/mole.

4. Composition de nettoyage thermofusible selon l'une quelconque des revendications 1 à 3, dans laquelle la composition de nettoyage thermofusible est constituée par un solvant thermofusible et une composition véhicule thermofusible.

5. Composition de nettoyage thermofusible selon l'une quelconque des revendications 1 à 4, dans laquelle le solvant thermofusible est liquide à une température de projection de la composition de nettoyage thermofusible.

6. Composition de nettoyage thermofusible selon l'une quelconque des revendications précédentes, dans laquelle le solvant thermofusible est de la diméthylsulfone.

7. Kit pour le fonctionnement et le nettoyage d'un appareil à jet d'encre comprenant une tête d'impression, le kit comprenant deux unités, une première unité comprenant une composition de nettoyage thermofusible, la composition de nettoyage thermofusible étant solide à température ambiante et liquide à une température élevée, comprenant première composition véhicule thermofusible, la première composition véhicule thermofusible étant solide à température ambiante et liquide à une température élevée, et un solvant thermofusible, le solvant thermofusible étant solide à température ambiante et liquide à une température élevée, et dans lequel une seconde unité comprend une composition d'encre thermofusible, la composition d'encre thermofusible étant solide à température ambiante et liquide à une température élevée, comprenant une seconde composition véhicule thermofusible, le second véhicule thermofusible étant solide à température ambiante et liquide à une température élevée, et un colorant.

8. Kit selon la revendication 7, dans lequel la première composition véhicule thermofusible est essentiellement la même que la seconde composition véhicule thermofusible.

9. Procédé de préparation d'une composition de nettoyage thermofusible selon l'une quelconque des revendications 1 à 6, le procédé comprenant les étapes consistant à :
∘ fournir un solvant thermofusible, le solvant thermofusible étant solide à température ambiante et liquide à une température élevée;
∘ fournir une composition véhicule thermofusible, la composition véhicule thermofusible étant solide à température ambiante et liquide à une température élevée;
∘ mélanger à chaud le solvant thermofusible et la composition véhicule thermofusible.

10. Procédé selon la revendication 9, dans lequel le procédé comprend en outre les étapes consistant à:
∘ verser la composition de nettoyage thermofusible fondue dans un moule
∘ laisser la composition de nettoyage thermofusible refroidir et se solidifier dans le moule;
∘ séparer la composition de nettoyage thermofusible solidifiée du moule.

11. Procédé de nettoyage d'une tête d'impression, la tête d'impression comprenant une unité de fusion de composition thermofusible conçue pour faire fondre une composition thermofusible, la composition thermofusible étant solide à température ambiante et liquide à une température élevée et un canal d'encre, l'unité de fusion étant en communication avec une unité d'alimentation en composition thermofusible, le canal d'encre s'étendant depuis l'unité de fusion jusqu'à un orifice de la tête d'impression, le canal d'encre étant adapté pour comprendre une composition thermofusible dans un état fondu, le procédé comprenant les étapes consistant à :
∘ appliquer une quantité d'une composition de nettoyage thermofusible, la composition de nettoyage thermofusible étant solide à température ambiante et liquide à une température élevée, comprenant un véhicule thermofusible, le véhicule thermofusible étant solide à la température ambiante et liquide à une température élevée, et un solvant thermofusible, le solvant thermofusible étant solide à température ambiante et liquide à une température élevée, à l'unité de fusion de la tête d'impression ;
∘ faire fondre la composition thermofusible
∘ rincer le canal d'encre de la tête d'impression à l'aide de la composition de nettoyage thermofusible fondue.

12. Procédé selon la revendication 11, dans lequel l'orifice est disposé dans une plaque à orifices comprenant plusieurs orifices, et dans lequel le procédé consiste en outre à :
∘ purger l'orifice à l'aide de la composition de nettoyage thermofusible et essuyer la plaque à orifices.

13. Utilisation d'une composition de nettoyage thermofusible, la composition de nettoyage thermofusible étant solide à température ambiante et liquide à une température élevée, comprenant un solvant thermofusible, le solvant thermofusible étant solide à température ambiante et liquide à une température élevée, et un véhicule de fusion, le véhicule de fusion étant solide à température ambiante et liquide à une température élevée, pour le nettoyage de têtes d'impression.
